# EUROPEAN PATENT SPECIFICATION

(11) **EP 3 187 258 B1**
(45) Date of publication and mention of the grant of the patent: **07.02.2024**
(21) Application number: 16207547.7
(22) Date of filing: 30.12.2016
(51) Int. Cl.: B01J 19/18, B01F 31/00

(54) **IMPROVEMENT IN OR RELATING TO REACTORS**
VERBESSERUNG AN ODER IM ZUSAMMENHANG MIT REAKTOREN
AMÉLIORATION APPORTÉE OU SE RAPPORTANT À DES RÉACTEURS

(30) Priority: 31.12.2015 GB 201523157
(43) Date of publication of application: 05.07.2017
(73) Proprietor: Autichem Ltd, Warrington, Cheshire WA4 5NW (GB)
(72) Inventor: MORRIS, David, Warrington, Cheshire WA4 5NW (GB)
(74) Representative: Bawden, Peter Charles

(56) References cited:
- DE-U1- 29 805 820
- FR-A- 1 307 546
- US-A- 2 571 366
- US-A- 4 941 132
- US-A1- 2004 076 073

## Description

The present invention relates to improvements in or relating to reactors and/or mixers and in particular to reactors through which process materials flow continuously. In particular the invention relates to the provision of agitation within reactants as they pass along the length of a reactor. The reactor with which the invention is concerned may be tubular, it may be single stage or multistage and the stages may be in series or in parallel. Furthermore the reactor may be horizontal, vertical, inclined or a combination thereof.

In order to obtain a uniform homogenous output from a tubular reactor it is desirable that the process fluid flows through the reactor in a manner as close to plug flow as possible as this ensures that all the reactants are subjected to substantially the same conditions as they pass through the reactor. Flow in a manner that is as near to plug flow as possible is essential in good continuous flow processes to ensure a consistent residence time of material within the reactor and to reduce the variabilities in the product. It is however also important that the reactants are well mixed and are uniformly mixed in order to optimise the speed and yield of the reaction. Accordingly the ideal conditions in a continuous flow reactor are that the axial flow of the reactants is plug flow whilst the flowing plug is subjected to efficient radial mixing. Although these ideal conditions may not be attainable the present invention provides a reaction system that moves the conditions in a continuous reactor nearer to the ideal situation.

Mixing in traditional batch reactors and/or mixers is predominantly achieved by mechanically stirring the process contents. Typically pitched and or curved blades are employed to pump the process fluid against the vessel bottom and vertically upwards. Vertical baffles are often incorporated close to the vessel walls that push the fluid towards the centre of the vessel. The purpose of these mixing arrangements is to ensure that the entire contents of the vessel are thoroughly mixed. Such mixing methodologies do not ideally translate to continuous flow processes however, where plug flow conditions are desirable. Flow reactor systems are sometimes built using continuously stirred tank reactors (CSTRs). These typically employ batch reactor mixing methodologies and as such do not provide a true plug flow system.

Most reactions require temperature control and reactors or mixers are frequently provided with a heat transfer surface backed by a reservoir of heat transfer fluid in a heat transfer jacket. In systems that employ mechanical stirring baffles are often used to obtain good mixing. Without the baffles the process fluid is simply pushed around the vessel in the direction of the agitator. The incorporation of baffles into the vessel wall can however result in the loss of heat transfer surface area. US2004/076073 discloses a tubular reaction vessel with an agitator.

The present invention provides what we have called the flip-flop agitator system. The flip-flop agitator system overcomes these shortfalls by both acting as agitator and baffle.

The invention provides a reaction vessel through which process material can flow in a continuous manner entering through an inlet and leaving via an outlet wherein an agitator is provided inside the vessel which is capable of reciprocal movement through an arc.

The invention further provides a process in which a process fluid flows continuously through a vessel and the agitator is rotated in one direction, is then stopped and then driven in the reverse direction. The rotation of the agitator in the first direction accelerates the process fluid radially within the reactor and the rotation in the second direction creates turbulence/mixing. The reactor is a tubular reactor as described and the agitator comprises a probe within the tubular reactor extending substantially along the length of the reactor and through holes (at least one but not limited in number) are cut into the body of the agitator. These holes permit and encourage radial flow of the process liquid through the agitator body and provide a mixing system that is much closer to plug flow conditions and is scalable from small laboratory systems to much larger industrial scales.

The flip-flop agitator action as employed in this invention is as follows.
- A flip is a partial, a full or multiple full rotation of the agitator in a single direction.
- A flop is a partial, a full or a multiple full rotation of the agitator in the opposite direction to a flip.
- A stop is when the agitator is stationary for any period of time usually between 1 nanosecond and 1 hour.

Accordingly the mixing action performed according to the process of this invention may be any of the following combinations of movement.
- A flip, followed by a stop, followed by a flip.
- A flop, followed by a stop, followed by a flop.
- A flip, followed by a stop, followed by a flop.
- A flip followed by an immediate flop.

The flip-flop agitator can be effectively operated by a number of different motive forces, including, but not limited to, compressed gases (e.g. air or nitrogen), electricity and hydraulics. These are used to power actuators, including hydraulic motors, electric motors, pneumatic motors and pneumatic actuators that turn the actuator in the desired action via a shaft and coupling mechanism. The agitator driveshaft can be either coupled to the actuator directly through a seal or magnetically coupled.

The size and shape of the agitator used in this invention may be chosen according to the size and shape of the reactor or the nature of the reaction or mixing process for which the reactor is to be used. The sizes and shapes of the agitator may be varied within a tubular reactor according to the reaction or mixing that is being performed and this can increase the flexibility and use of the invention. However we have found that an agitator with sharp corners and also having a rectangular cross section with the surfaces changing from convex to concave in design provides particularly good mixing generating radial turbulence in the process fluid. We have also found that good mixing is achieved if the agitator occupies from 10% to 99 %, preferably 25% to 90% of the cross sectional area of the tube within which it is used.

As a further improvement free moving agitation elements, can be housed within the main agitator body which in combination with through holes in the agitator serve to push and pull the process material tangentially to the axial plane of the agitator and radially to the direction of flow of the process fluid. Centrifugal and gravitational forces will drive the free moving elements.

In an alternative embodiment catalysts and other solids may be immobilised and held captive within the agitator through holes. Free moving agitation elements can again be used to assist the radial flow of the process fluid through the immobilised catalyst or solids.

In one embodiment of the invention the agitator is driven by a pneumatic motor first in the clockwise direction, then stopped and driven in the counter clockwise direction (or vice versa). This action is repeated multiple times for time periods that are determined according to the nature of the process materials and the speed at which they pass through the reactor in order to give the desired mixing effect.

In a preferred embodiment of the invention a pneumatic rotary actuator which is limited in its freedom to rotate by a mechanical stop is used to drive the flip-flop agitator in the clockwise direction, then stopped and driven in the counter clockwise direction (or vice versa). Unlike the pneumatic motor, in this instance the freedom of the actuator to freely rotate is limited by a mechanical stop. This sudden stopping of the agitator as it hits the mechanical stop creates turbulence within the process fluid, due to the inertia of the process fluid within the reactor, which was up until that instant being pushed along by the movement of the agitator.

Pneumatic rotary actuators use pressurized gases to rotate mechanical components. Several different types of rotary actuators are available and can be used in the present invention. They include single rack-and-pinion actuators; double or four piston rack-and-pinion actuators; single rotary vane devices which are actuated directly by pressurized gas and double rotary vane devices that use two chambers of pressurized gas to produce increased torque. Multi-motion rotary vane actuators are also available and suited to this application. In the preferred embodiment of the invention a double vane rotary actuator is used as this has more torque and faster acceleration from the stationary position which can be utilized to provide the agitator with higher shear mixing capabilities.

In a more preferred embodiment of the invention a stepper motor is used to actuate the flip-flop agitator in the clockwise direction, then stopped and driven in the counter clockwise direction (or vice versa). Unlike the pneumatic rotary actuator the stepper motor does not require a mechanical stop and can be rotated without limit in either direction. When stationary the stepper motor has a high holding torque that resists the force of the inertia generated by the moving process fluid. The sudden stopping of the agitator creates turbulence within the process fluid, due to the inertia of the process fluid, which was up until that instant being pushed along by the movement of the agitator.

A stepper motor is a type of electric motor that converts electrical pulses into discrete mechanical movements. Typically each step can produces a 1.8° rotation of the motor shaft per pulse. Higher resolution stepping can be produced however with the use of electronic motor control systems. The speed of the motor shafts rotation is directly related to the frequency of the input pulses and the length of rotation is directly related to the number of input pulses applied. When used to drive the flip-flop agitator a stepper motor provides a very flexible solution that allows both the agitator speed and degrees of movement before stopping and or changing direction to be varied and adjusted to suit the exact process requirements at any point of the process. Consequently in flow reactor systems that employ real time monitoring of the reaction state, adjustments to the process mixing can be made in response to process disturbances, or when changes in state are detected in the process media at a certain point in the process.

The type of agitator drive system employed will ultimately depend on the each particular process or unit operation. In most circumstances however a system wherein the bidirectional speed of the agitation is between 0.001 and 100 flip-flop cycles per second with the agitator travelling at speeds between 1 and 10000 rpm, will fulfil most operational needs.

Flow reactors are traditionally operated as open loop steady state systems where the process is switched on and manually adjusted until an acceptable output is achieved. Residence times of the reactants within the reactors are usually held at an ideal constant. Whilst this technique works well at small scales, at industrial scales where plant disturbances are more prevalent and of more significance, process variabilities are often encountered.

This invention can also overcome these problems and in a further embodiment of the invention the reactor system can be operated as a continuous plug flow reactor that combines CSTR and tubular technology to improve heat transfer and mixing control. This can be achieved by closing the controlling loop using analytical instrumentation to monitor the system and using the analysis to cause changes in the operating conditions to achieve the desired temperature profile and energy balance along the reactor. The analysis required will depend upon the nature of the reaction although analytical techniques that may be used include particle size analysis, Fourier Transform Infrared Spectroscopy, Ultra Violet Resonance Spectroscopy, Raman Spectroscopy or the measurement of heat reaction. For example, the reactor may consist of multiple stages with the rate of change in heat measured at each stage; allowing for an assessment of the reaction rate and the stability of the reaction along the reactor.

To be able to operate such a control methodology effectively the placement of the analytical instrument or sensor is critical. In traditional long continuous flow reactors determining the exact location of a process event is almost impossible and consequently it is not possible to position instrumentation such that it can reliably measure and control the process. With the present invention however control of the reaction will be improved by the internal flow distribution and mixing systems, use of the reactor of this invention provides uniform reaction mixture throughout the reactor and can also ensure uniform even temperature profile along the reactor where the reactor is provided with a temperature control jacket providing a heat transfer system, this invention reduces or eliminates the formation of hot and cold spots and controls the energy flow within the reactants. Internal flow distribution will be controlled by the reactor's heat transfer system, which will ensure temperature is uniformly distributed across the heat exchanger wall; thereby supplying each molecule in the reaction material with the desired and controlled amount of energy. By custom designing a multi-stage system it is possible to determine the exact region of the reactor that an event will take place allowing instrumentation to be strategically positioned to allow reliable closed loop control of residence time. With reactions such as crystallisation this allows improved control and identification of the onset of crystal nucleation and provides control of the speed of crystallisation and crystal size.

We have found that the reactor of the present invention is particularly useful when provided with a heat transfer jacket as described in our copending Application GB1523153.3.

In copending Application Number GB1523153.3 we describe a heat transfer jacket in which internal mixing of the heat transfer fluid is provided within the heat transfer jacket in order to create turbulent flow of the heat transfer fluid. In a preferred embodiment the turbulence in the heat transfer fluid is created by the provision of flow interrupting elements within the jacket. The choice of the interrupting elements may depend upon the size and shape of the reactor. For smaller scale reactors such as laboratory reactors the interrupting elements may be loose spheres which pack out the jacket and create turbulent flow conditions, as the heat transfer fluid is pumped through the jacket. Larger scale reactors with larger volume heat transfer jackets may require baffles to produce sufficient turbulence. Other interrupting elements can however be used such as other loose shapes, prefabricated baffles, flow disrupters or turbulator assemblies.

As disclosed in copending Application Number GB1523153.3 the flow interruption elements that are provided can be any suitable size or shape. They may be baffles integral with the internal walls of the heat transfer jacket but we prefer to use loose elements within the jacket. In particular we have found that if the jacket is packed with loose elements around which the heat transfer fluid flows it is possible to achieve much more uniform control of the energy of the system and also control of the temperature of the reactants.

It is also important that the flow interruption elements have a high thermal conductivity as this can help to reduce the formation of temperature differentials within the heat transfer fluid in the jacket. Small metal spheres or metal baffles have been found to be particularly useful, in particular metal spheres having a copper exterior are especially useful in small reactors.

In copending Application Number GB1523153.3 we also describe how turbulence in the heat transfer fluid may also be accomplished by reversing the direction of flow of the heat transfer fluid within the jacket or by pulsing the flow in a single direction. Reversing may be achieved by the provision of synchronised pumps at both ends of the heat transfer jacket. Pulsing may be achieved by suitable programming of the pump system that injects the fluid into the jacket. The reversal may be periodic and occasional.

We have found that particularly good control may be achieved if one uses an agitator system according to the present invention within the reactor together with the reversal of flow of the heat transfer fluid in the temperature control jacket in combination with the flow interrupters such as the baffles or the spheres particularly those having a metal exterior. The reversal of the heat transfer fluid may momentarily reverse the direction of flow of the heat transfer fluid. In the preferred embodiment the direction of heat transfer fluid flow remains overall in the forwards direction through the jacket, but the momentarily reversal of flow creates an oscillation in the flow and turbulence/mixing is subsequently created as the fluid passes through the flow restrictions created by the interrupting elements. In the preferred embodiment, fast activated valves, pistons or diaphragms may be used to momentarily pulse the flow in the reverse direction.

The present invention is illustrated by reference to the accompanying Figures in which
Figure 1 shows a cross section of a tubular flow reactor containing a flip-flop agitator according to this invention.

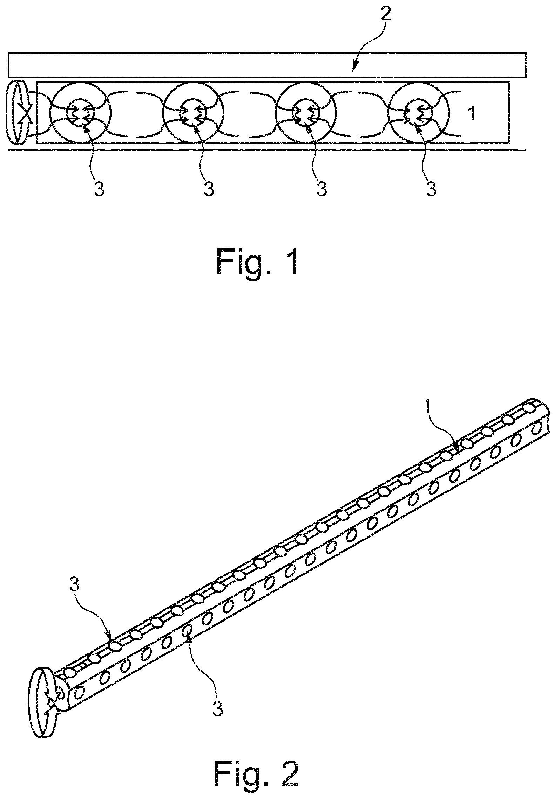

Figure 2 shows an example of the agitator used in the reactor of Figure 1 and the cross sectional profile of the agitator utilizers a mixture of concave and convex profiles to change the radial flow path of the process fluid as the agitator rotates first in one direction and then in the other. The number of concave and convex profiles is limited only by the physical diameter of the agitator. We have found that a minimum of one convex profile with a minimum depth and width of 1 mm x 1 mm and of length equal to that of the agitator shaft is useful to optimise the minimum mixing conditions. Agitators with more than one, but less than 10000 preferably less than 1000, concave profiles are preferred. Concave profiles preferably that have a depth of less than 49% of the agitator diameter and are preferably of a width of less than 99% of the agitator diameter.
Figure 3 shows the cross section of the tubular reactor of Figure 1 provided with a heat transfer jacket containing interrupting elements.
Figure 4 is a cross section of the agitator showing immobilised particles such as a catalyst with the agitator.
Figure 5 is a schematic illustration of a reactor in which the diameter of the agitator is progressively decreased along the length of a tubular reactor of constant internal diameter.

Figure 1 shows a flip-flop agitator system. The agitator (1) is provided within a tubular vessel (2) and is rotated in one direction to accelerate the process fluid radially within the vessel. The agitator is then quickly stopped before being driven in the reverse direction, which creates turbulence/mixing. Through holes (at least one but not limited in number) (3) are cut into the body of the agitator which permit and encourage radial flow of the process liquid through the agitator body.

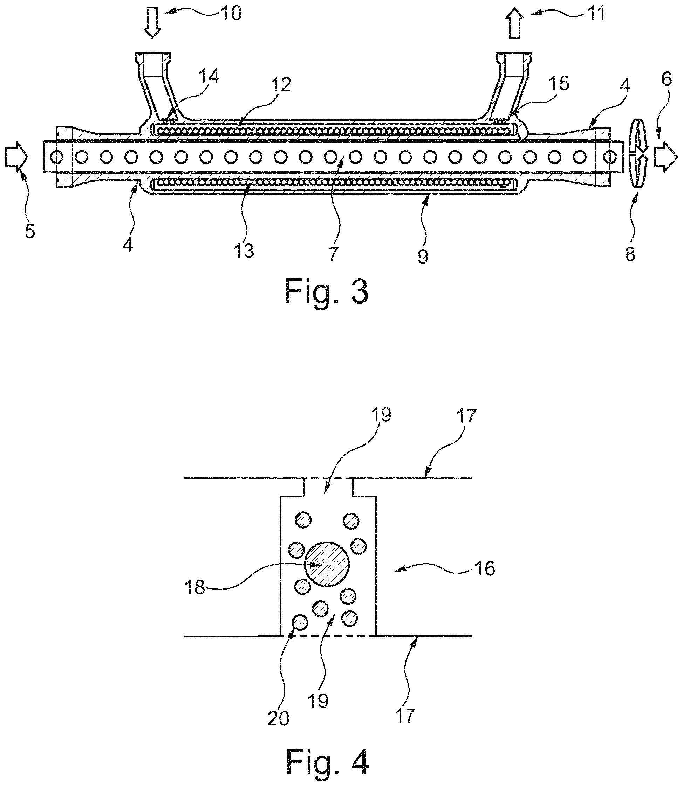

Figure 3 shows a reactor tube (4) in which process fluid flows in the direction shown by the arrows (5) and (6) containing an agitator (7) which can be reciprocated as shown by the arrow (8). The reactor is provided with a temperature control jacket (9) through which heat transfer fluid passes as shown by the arrows (10) and (11). The heat transfer jacket contains lose spheres (12) and (13) which cause turbulence in the flowing heat transfer fluid. Mesh inserts (14) and (15) are provided to hold the spheres within the jacket.

Figure 4 shows an agitator element (16) with a reactor (17) with a free moving agitator element (18) and a through hole (19), the agitator further containing immobilised particles (such as a catalyst) (20) with the agitator close to the through hole (19).

In theory there are no limits to the length and diameter of the reaction vessel. There are however a number of practicalities that will ultimately determine the design sizes and length to diameter ratio of each particular system. These include but are not limited to, consideration of the kinetics of the reaction in question and other process needs, consideration of the mechanical construction in relation to operational pressure, temperature and materials of construction, consideration of the erection, operation and maintenance of the equipment and consideration of the cost of construction and installation. Tubular reactors having a tubular diameter ranging from 10mm to 5000mm may be employed. The length of the vessel is similarly constrained and in practice vessels with lengths of less than 20 meters are preferred. Where the process and reaction kinetics necessitate much longer residence times however multiple shorter vessels may be employed in series and or in parallel to create systems that can be several km in length. In such circumstances the costs of construction and installation are limiting factors.

The possible ratios of tube length to tube diameter are again in theory limitless and as yet we have not established any technical preference for a tube diameter to length ratio. From a cost perspective however it is most economical to fabricate the equipment using off the shelf materials and materials such as steel are often supplied in 3 and 6 meter lengths and in a range of standard diameters. From a heat transfer perspective smaller diameter vessels are preferred as they provide the system with a greater surface to volume ratio that will consequently add or remove heat from a process more effectively than a larger diameter tube with a relatively smaller heat transfer area per unit volume of process fluid.

The residence time within the reactor for any given process can be described as the amount of time needed to complete the reaction to its best attainable yield using economic and sustainable methods. Each different process or unit operation in a reactor will require a different residence. Consequently there is no one size fits all circumstances and the ideal length and diameter of the vessel will vary from process to process.

For example, where highly exothermic reactions are operated the energy released is significant and it is desirable in such circumstances to remove the energy produced as efficiently and as quickly as possible. In these circumstances the ratio of heat transfer area to process volume is an important variable and long small diameter tubes are often employed. In such a reaction system the flow velocity of the process fluid and the energy exchange rate of the heat transfer system are constant along the entire length of the reactor. However, the amount of energy released from the reaction is very different at the start of the reaction to that at the end of the reaction and the lack of control of the process flow velocity/residence time and energy exchange rate can result in a poor yield and a heterogeneous product. These problems are addressed by the present invention. For example the outside diameter of the agitator relative to the internal diameter of the tubular vessel may be adjusted, usually reduced, along the length of the reactor. Alternatively or additionally the displacement volume of the agitator can be varied along the length of the reactor. In these embodiments the relative ratio of heat transfer surface area to process volume is adjusted. We have also found that good mixing is achieved if the agitator occupies from 10% to 99 % of the cross sectional area of the tube within which it is used. The change in agitator diameter along the length of the reactor can be either a tapered change or a step change where there is at least 1 step change but no more than 10000, typically no more than 100, step changes in diameter.

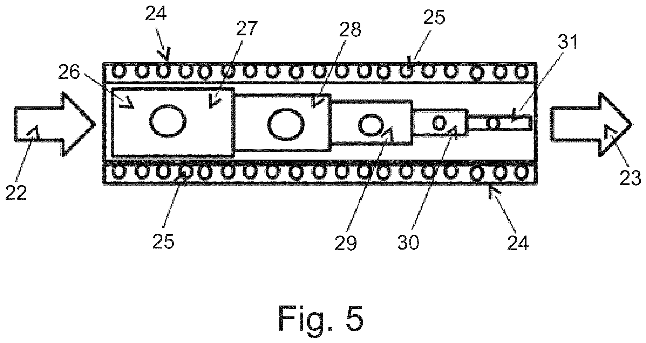

Figure 5 which shows how a process fluid can flow through a reactor (21) as indicated by arrows (22) and (23). The reactor being provided with a heat transfer jacket (24) filled with spheres (25). The agitator (26) is split into six sections (27), (28), (29), (30), (31) and (32) of progressively decreasing diameter. In this way the process fluid has a short residence time in section (27) and a progressively increasing residence time as it passes along the reactor giving control of the temperature according to the degree of reaction.

For some process applications this technology may be operated in part or as a whole system as a batch or loop reactor. For example a flow crystallization system that filters out undersized particles and reintroduces them to the system either at the start of the reactor or part way along the reactor length.

The reactors of this invention may be made from a range of materials depending on the nature of the reactants. However glass (e.g. borosilicate and silica quartz), ceramics (e.g. Zirconia and Silicon Carbide), plastics (e.g. PTFE, PFA, PVDF and Peek), alloy steel (e.g. Alloy C276, Tantalum, Titanium and stainless steels), steel, glass lined (enamelled) steel and plastic lined steel have been found to be particularly useful.

## Claims

1. A tubular reaction vessel through which process material can flow in a continuous manner entering through an inlet and leaving via an outlet wherein an agitator is provided inside the vessel which is capable of reciprocal movement through an arc to create agitation about the axis of the tubular vessel in a radial direction to the direction of flow of the process material wherein the reciprocal movement is produced by a partial, full or multiple full rotation of the agitator in a single direction followed by a stop and followed by partial, full or multiple full rotation of the agitator in the opposite direction wherein the agitator comprises a probe within the tubular reactor extending substantially along the length of the reactor and through holes are cut into the body of the agitator

2. A reaction vessel according to Claim 1 in which the agitator is operated by compressed gases, electricity or hydraulics.

3. A reaction vessel according to Claim 1 or Claim 2 wherein the agitator has sharp corners and has a rectangular cross section with the surfaces changing shape from convex to concave.

4. A reaction vessel according to any of the preceding claims wherein the agitator occupies from 10% to 99% of the cross sectional area of the vessel within which it is used.

5. A reaction vessel according to any of the preceding claims in which the diameter of the agitator is varied along the length of the reactor.

6. A reaction vessel according to any of the preceding claims in which a catalyst is held within the agitator through holes.

7. A reaction vessel according to any of the preceding claims comprising a controlling loop which is closed and analytical instrumentation is used to monitor the system and using the analysis is used to change the operating conditions of the vessel to achieve the desired temperature profile and energy balance along the reactor.

8. A reaction vessel according to any of the preceding claims provided with a heat transfer jacket in which turbulence of the heat transfer fluid is created within the heat transfer jacket.

9. A reaction vessel according to Claim 10 in which turbulence in the heat transfer fluid is created by reversing the direction of flow of the heat transfer fluid within the jacket or by pulsing the flow in a single direction.

10. A reaction vessel comprising a plurality of reaction vessels according to any of the preceding claims.

11. A process in which a process fluid flows continuously through a tubular vessel provided with an internal agitator extending along the length of the vessel and which has through holes cut into the body of the agitator wherein the agitator is first rotated within the tube in one direction that is radial to the longitudinal axis of the vessel, is then stopped and then rotated in the reverse direction that is radial to the longitudinal axis of the vessel, wherein the rotation of the agitator and the through holes create agitation about the axis of the tubular vessel in a direction radial to the direction of flow of the process material through the tubular vessel.

12. A process according to Claim 11 comprising a flip, followed by a stop, followed by a flop.

13. A process according to Claim 11 comprising a flop, followed by a stop, followed by a flip.

## Patentansprüche

1. Rohrförmiges Reaktionsgefäß, durch das Prozessmaterial in kontinuierlicher Weise fließen kann, das durch einen Einlass eintritt und durch einen Auslass austritt, wobei ein Rührer im Inneren des Gefäßes vorgesehen ist, der in der Lage ist, sich über einen Bogen hin- und herzubewegen, um eine Bewegung um die Achse des rohrförmigen Gefäßes in einer zur Strömungsrichtung des Prozessmaterials radialen Richtung zu erzeugen, wobei die Hin- und Herbewegung durch eine teilweise, vollständige oder mehrfache vollständige Drehung des Rührers in einer einzigen Richtung, gefolgt von einem Stopp und einer anschließenden teilweisen, vollständigen oder mehrfachen vollständigen Drehung des Rührers in der entgegengesetzten Richtung erzeugt wird, wobei der Rührer eine Sonde innerhalb des rohrförmigen Reaktors umfasst, die sich im Wesentlichen entlang der Länge des Reaktors erstreckt, und Durchgangslöcher in den Körper des Rührers geschnitten sind.

2. Reaktionsgefäß nach Anspruch 1, bei dem der Rührer durch Druckgase, Elektrizität oder Hydraulik betrieben wird.

3. Reaktionsgefäß nach Anspruch 1 oder Anspruch 2, bei dem der Rührer scharfe Ecken und einen rechteckigen Querschnitt aufweist, wobei die Oberflächen ihre Form von konvex zu konkav ändern.

4. Reaktionsgefäß nach einem der vorhergehenden Ansprüche, wobei der Rührer 10 % bis 99 % der Querschnittsfläche des Gefäßes einnimmt, in dem er verwendet wird.

5. Reaktionsgefäß nach einem der vorhergehenden Ansprüche, bei dem der Durchmesser des Rührers über die Länge des Reaktors variiert wird.

6. Reaktionsgefäß nach einem der vorangehenden Ansprüche, bei dem ein Katalysator innerhalb der Durchgangslöcher des Rührers gehalten wird.

7. Reaktionsgefäß nach einem der vorhergehenden Ansprüche, das einen geschlossenen Regelkreis umfasst, wobei analytische Instrumentierung zur Überwachung des Systems verwendet wird und die Analyse zum Ändern der Betriebsbedingungen des Gefäßes verwendet wird, um das gewünschte Temperaturprofil und das gewünscht Energiegleichgewicht entlang des Reaktors zu erreichen.

8. Reaktionsgefäß nach einem der vorhergehenden Ansprüche, das mit einem Wärmeübertragungsmantel versehen ist, in dem eine Turbulenz des Wärmeübertragungsfluids innerhalb des Wärmeübertragungsmantels erzeugt wird.

9. Reaktionsgefäß nach Anspruch 10, bei dem Turbulenz im Wärmeübertragungsfluid durch Umkehrung der Strömungsrichtung des Wärmeübertragungsfluids innerhalb des Mantels oder durch pulsierende Strömung in einer einzigen Richtung erzeugt wird.

10. Reaktionsgefäß mit einer Vielzahl von Reaktionsgefäßen nach einem der vorangehenden Ansprüche.

11. Verfahren, bei dem ein Prozessfluid kontinuierlich durch ein rohrförmiges Gefäß fließt, das mit einem inneren Rührer versehen ist, der sich entlang der Länge des Gefäßes erstreckt und Durchgangslöcher aufweist, die in den Körper des Rührers geschnitten sind, wobei der Rührer zunächst innerhalb des Rohres in einer Richtung gedreht wird, die radial zur Längsachse des Gefäßes ist, dann angehalten wird und dann in die entgegengesetzte Richtung, die radial zur Längsachse des Gefäßes verläuft, gedreht wird, wobei die Drehung des Rührers und die Durchgangslöcher eine Bewegung um die Achse des rohrförmigen Gefäßes in einer Richtung radial zur Strömungsrichtung des Prozessmaterials durch das rohrförmige Gefäß erzeugen.

12. Verfahren nach Anspruch 11, umfassend einen Flip, gefolgt von einem Stopp, gefolgt von einem Flop.

13. Verfahren nach Anspruch 11, umfassend einen Flop, gefolgt von einem Stopp, gefolgt von einem Flip.

## Revendications

1. Cuve de réaction tubulaire à travers laquelle un matériau de traitement peut s'écouler d'une manière continue en entrant par une entrée et en sortant via une sortie, dans laquelle un agitateur est prévu à l'intérieur de la cuve qui peut effectuer un mouvement de va-et-vient sur un arc afin de créer l'agitation autour de l'axe de la cuve tubulaire dans une direction radiale par rapport à la direction d'écoulement du matériau de traitement, dans laquelle le mouvement de va-et-vient est produit par une rotation partielle, complète ou complète multiple de l'agitateur dans une direction unique suivie par un arrêt et suivi par une rotation partielle, complète ou complète multiple de l'agitateur dans la direction opposée, dans laquelle l'agitateur comprend une sonde dans le réacteur tubulaire s'étendant sensiblement le long de la longueur du réacteur et des trous débouchants sont coupés dans le corps de l'agitateur.

2. Cuve de réaction selon la revendication 1, dans laquelle l'agitateur est actionné par des gaz comprimés, l'électricité ou l'hydraulique.

3. Cuve de réaction selon la revendication 1 ou la revendication 2, dans laquelle l'agitateur a des coins pointus et a une section transversale rectangulaire avec les surfaces qui changent de forme en passant de convexe à concave.

4. Cuve de réaction selon l'une quelconque des revendications précédentes, dans laquelle l'agitateur occupe de 10% à 99% de la surface transversale de la cuve à l'intérieur de laquelle il est utilisé.

5. Cuve de réaction selon l'une quelconque des revendications précédentes, dans laquelle le diamètre de l'agitateur est modifié le long de la longueur du réacteur.

6. Cuve de réaction selon l'une quelconque des revendications précédentes, dans laquelle un catalyseur est maintenu à l'intérieur des trous débouchants d'agitateur.

7. Cuve de réaction selon l'une quelconque des revendications précédentes, comprenant une boucle de contrôle qui est fermée et un instrument analytique est utilisé pour surveiller le système et l'utilisation de l'analyse est utilisée pour modifier les conditions de fonctionnement de la cuve pour obtenir le profil de température souhaité et l'équilibre énergétique le long du réacteur.

8. Cuve de réaction selon l'une quelconque des revendications précédentes, prévue avec une chemise de transfert de chaleur dans laquelle la turbulence du fluide de transfert de chaleur est créée dans la chemise de transfert de chaleur.

9. Cuve de réaction selon la revendication 10, dans laquelle la turbulence dans le fluide de transfert de chaleur est créée en inversant la direction d'écoulement du fluide de transfert de chaleur dans la chemise ou en en donnant une impulsion à l'écoulement dans une seule direction.

10. Cuve de réaction comprenant une pluralité de cuves de réaction selon l'une quelconque des revendications précédentes.

11. Processus dans lequel un fluide de traitement s'écoule de manière continue à travers une cuve tubulaire prévue avec un agitateur interne s'étendant le long de la longueur de la cuve et qui a des trous débouchants coupés dans le corps de l'agitateur, dans lequel l'agitateur tourne dans un premier temps à l'intérieur du tube dans une direction qui est radiale par rapport à l'axe longitudinal de la cuve, est ensuite arrêté et ensuite entraîné en rotation dans la direction inverse qui est radiale par rapport à l'axe longitudinal de la cuve, dans lequel la rotation de l'agitateur et les trous débouchants créent l'agitation autour de l'axe de la cuve tubulaire dans une direction radiale à la direction d'écoulement du matériau de traitement à travers la cuve tubulaire.

12. Processus selon la revendication 11, comprenant un retournement, suivi par un arrêt, suivi par une inversion.

13. Processus selon la revendication 11, comprenant une inversion, suivie par un arrêt, suivi par un retournement.
